(19) Europäisches Patentamt
European Patent Office
Office européen des brevets

(11) EP 2 382 249 B1

(12) EUROPÄISCHE PATENTSCHRIFT

(45) Veröffentlichungstag und Bekanntmachung des Hinweises auf die Patenterteilung:
**03.07.2013 Patentblatt 2013/27**

(21) Anmeldenummer: **09767970.8**

(22) Anmeldetag: **02.12.2009**

(51) Int Cl.:
***C08F 228/02*** (2006.01) ***C09K 8/508*** (2006.01)

(86) Internationale Anmeldenummer:
**PCT/EP2009/008585**

(87) Internationale Veröffentlichungsnummer:
**WO 2010/072313 (01.07.2010 Gazette 2010/26)**

(54) **VERWENDUNG VON VINYLPHOSPHONSÄURE ZUR HERSTELLUNG BIOLOGISCH ABBAUBARER MISCHPOLYMERE UND DEREN VERWENDUNG FÜR DIE EXPLORATION UND FÖRDERUNG VON ERDÖL UND ERDGAS**

USE OF VINYLPHOSPHONIC ACID IN THE PRODUCTION OF BIODEGRADABLE COPOLYMERS AND THEIR USE IN THE EXPLORATION AND EXTRACTION OF MINERAL OIL AND NATURAL GAS

UTILISATION D'ACIDE VINYLPHOSPHONIQUE DANS LA PRODUCTION DE COPOLYMERES BIODEGRADABLES ET LEUR UTILISATION DANS LE DOMAINE DE L'EXTRACTION ET DE LA PRODUCTION PETROLIERE ET DE GAZ NATUREL

(84) Benannte Vertragsstaaten:
**DE DK ES FR GB IT LT NL NO**

(30) Priorität: **24.12.2008 DE 102008063096**

(43) Veröffentlichungstag der Anmeldung:
**02.11.2011 Patentblatt 2011/44**

(73) Patentinhaber: **Clariant Finance (BVI) Limited
Road Town, Tortola (VG)**

(72) Erfinder:
- **KAYSER, Christoph
55127 Mainz (DE)**
- **BOTTHOF, Gernold
36326 Antrifttal (DE)**
- **TONHAUSER, Jürgen
65375 Oestrich-Winkel (DE)**
- **SCHÄFER, Michael
63584 Gründau-Rothenbergen (DE)**
- **DIEMEL, Claudia
63571 Gelnhausen (DE)**
- **HEIER, Karl, Heinz
60598 Frankfurt and Main (DE)**

(74) Vertreter: **Mikulecky, Klaus et al
Clariant Produkte (Deutschland) GmbH
Patent Management
Am Unisys-Park 1
65843 Sulzbach (DE)**

(56) Entgegenhaltungen:
**EP-A1- 1 630 181 WO-A1-2008/019987**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 382 249 B1

## Beschreibung

Die vorliegende Erfindung betrifft die Verwendung von Vinylphosphonsäure zur Herstellung von biologisch abbaubaren Mischpolymeren, enthaltend Struktureinheiten abgeleitet aus Acrylamido-N-Methylenpropenylsulfonaten (AMPS), N-Vinylamiden und Acrylsäure oder deren Derivaten, sowie deren Verwendung als Additiv bei Tiefbohrungen, Tiefbohrzementierungen Komplettierungs- und Aufwältigungsflüssigkeiten sowie zur Reduzierung der Permeabilität des Wassers im sondennahen Bereich Erdöl bzw. Erdgas und Wasser führender Horizonte.

Im Bereich der Tiefbohrtechnik erfüllen Polymere in wasserbasischen Bohrspülungen unterschiedliche Aufgaben. So führen sie zu einer Reduzierung des Wasserverlustes vor allem beim Durchbohren von durchlässigen Formationen durch Aufbau einer dünnen Filterschicht, welche zu einer Abdichtung des Bohrloches führt. Außerdem halten sie das entstehende Bohrklein durch Dispergierung in der Schwebe und helfen damit u. a. das Bohrklein zu Tage zu fördern. Durch den Einsatz von polymeren Additiven werden außerdem die rheologischen Eigenschaften der Bohrspülungen verändert, insbesondere kommt es zu einer Erhöhung der Viskosität und Fließgrenze. Speziell fluid-loss-Additive für Tiefbohrungen sollten eine hohe Temperaturbeständigkeit und eine geringe Störanfälligkeit in Bezug auf stark saline Bedingungen, insbesondere in Bezug auf mehrwertige Kationen, aufweisen und gleichzeitig die rheologischen Eigenschaften so wenig wie möglich beeinflussen, da es sonst bei Einstellung von geringen Wasserverlustwerten zu einer unerwünschten Erhöhung der plastischen Viskosität und Fließgrenze kommt.

Nachdem eine bestimmte Sektion abgebohrt ist, werden Futterrohre in das Bohrloch eingebracht. Anschließend müssen die Futterrohre fixiert, d. h. in den Ringraum mit dem Gebirge muss ein Zementschlamm eingepumpt werden, der mit hohen Festigkeiten aushärtet. Der sich bildende Zementstein muss undurchlässig für Gase und Flüssigkeiten sein, damit kein Gas und/oder Öl aus der Trägerformation in andere Formationen oder zur Oberfläche fließen kann. An den zu verpumpenden Zementschlamm werden sehr hohe Anforderungen gestellt. Es soll gut pumpbar sein, d. h. möglichst niedrig viskos und trotzdem keine Entmischung zeigen. Die Wasserabgabe soll im porösen Gebirge niedrig sein, damit der Pumpdruck infolge Ringraumverengung durch dickere Filterkuchen an der Bohrlochwand nicht zu stark ansteigt, was zum Aufreißen des Gebirges führen kann. Gibt der Zementschlamm zu viel Wasser ab, dann bindet er nicht voll ab und wird für Gas und Öl durchlässig. Schließlich muss der sich bildende Zementmantel im Ringraum möglichst schnell bestimmte Festigkeiten erreichen und beim Abbinden darf keine Schrumpfung auftreten, die zu Fließkanälen für Gas, Öl und Wasser führt.

Eine optimale Einstellung der Zementschlammeigenschaften ist nur durch Additive möglich.

Man unterscheidet 3 wesentliche Additivgruppen:

1. Verzögerer, welche die Abbindezeit erhöhen, damit der Zementschlamm für die volle Verpumpungsphase, die bei sehr tiefen Bohrungen mehrere Stunden beträgt, ausreichend flüssig bleibt. Die bekanntesten Produkte dieses Typs sind Lignosulfonate und Carboxymethylhydroxyethylcellulosen.

2. Dispergiermittel, welche die Zementschlämme homogen dispergieren und die Viskosität herabsetzen, was zu deren besseren Verpumpung führt. Als solche Produkte werden in US-3 465 825 Kondensationsprodukte aus Mononaphthalinsulfonaten und Formaldehyd und in US-4 053 323 N-sulfoalkylsubstituierte Acrylamide beschrieben. Auch die Lignosulfonate und Carboxymethylhydroxyethylcelluloseether haben neben der verzögernden eine dispergierende Wirkung auf Zementschlämme.

3. Wasserverlustreduzierer, welche die Wasserabgabe der Zementschlämme an poröse Formationen während der Verpumpung der Zementschlämmen in den Ringraum zwischen Futterrohr und Bohrlochwand reduzieren. Die bekanntesten Produkte dieses Typs sind vollsynthetische Mischpolymere aus Acrylat/Acrylamid gemäß DE-B-28 30 528 und Blockpolymerisate aus Vinylpyrrolidon und Acrylamid gemäß GB-B-14 73 767 und die halbsynthetischen Carboxymethylhydroxyethyl- sowie Hydroxyethylcelluloseether.

Die Wasserverlustreduzierer sind von besonderer Bedeutung, da pumpbare Zementschlämme, die nur aus Zement und Wasser bestehen, hohe Volumina Wasser abgeben, wenn sie bei der Bohrlochzementation an porösen Gesteinsschichten vorbeifließen. Das alkalische Wasser bringt in den Formationen Tone zum Quellen und bildet mit $CO_2$ aus dem Erdgas oder Erdöl Niederschläge von Calciumcarbonat. Beide Effekte mindern die Permeabilität der Lagerstätten und reduzieren die späteren Produktionsraten. Der Übertage für die jeweilige Zementation optimal eingestellte Zement erfährt durch die Wasserabgabe eine schwer kalkulierbare, den Pumpvorgang erschwerende Viskositätserhöhung. Die Wasserabgabe an poröse Formationen kann zu einer inhomogenen Zementmasse führen, welche nicht homogen erstarrt und für Gase, für flüssige Kohlenwasserstoffe und Wässer durchlässig ist. Dies kann zum Entweichen von Erdgas oder Erdöl durch den mit porösen Zement gefüllten Ringraum in andere Formationen und in Extremfällen bis Übertage führen. Weiterhin können aggressive saline Wässer und Gase durch den porösen Zement auf die Futterrohre wirken und diese korrodieren.

Zur Gewährleistung einer technisch einwandfreien Bohrlochzementation ist die Herabsetzung des Wasserverlustes der eingesetzten Zementschlämme notwendig. Der Wasserverlust wird dabei vergleichend mit einer Filterpresse nach API Code 29 gemessen. Dabei ist die Filterfläche 45,8 $\pm$ 0,7 $cm^2$, der Überdruck 7 $\pm$ 0,7 atü und die Filtrationszeit 30 Minuten. In letzter Zeit werden immer häufiger auch Messungen des Wasserverlustes mit der Hochtemperatur- und Hochdruck-Filterpresse (Baroid Nr. 387) durchgeführt. Man filtert normalerweise mit einem Differenzdruck von 35 bar und gleicht die Temperatur der in der Praxis auftretenden an.

Die verbreitetste Anwendung zur Reduktion des Wasserverlustes von Zementschlämmen haben bisher die halbsynthetischen Celluloseether des Typs Hydroxyethylcellulose und teilweise auch Carboxymethylhydroxyethylcelluloseether gefunden. Ihr sinnvoller Einsatz findet seine Grenzen durch die Temperaturen, denen die Zementschlämme ausgesetzt werden. Die Wirkung fällt schon über 100 °C stark ab und lässt sich dann auch durch höhere Einsatzmengen nicht mehr ausgleichen. Vollsynthetische Mischpolymere, bestehend aus Acrylamid und Acrylsäure oder Vinylpyrrolidon, haben sich in tieferen Bohrungen mit höheren Sohlentemperaturen nicht durchsetzen können. Sie zeigen, besonders wenn saline Wässer zur Formulierung von Zementschlämmen eingesetzt werden, eine sehr mäßige Wirkung, die bei höheren Temperaturen weiter abfällt. Saline Wässer sind bei Bohrungen auf dem Meer üblich und bei Zementationen in Salzschichten notwendig. Vollends versagen diese Produkte, wenn als Abbindebeschleuniger $CaCl_2$ eingesetzt wird. Der Stand der Technik zeigt, dass gegenwärtig eine Lücke bei Produkten zur Reduktion des Wasserverlustes von Zementschlämmen für Tiefbohrungen besteht, besonders wenn die Zementschlämme Temperaturen von über 100 °C ausgesetzt und mit salinen Wässern formuliert werden.

Teilweise haben die Additive mehr als eine Funktion. Dispergatoren wie Lignosulfonate und Polymethylennaphthalinsulfonate verzögern die Abbindung und wirken leicht reduzierend auf den Wasserverlust. Manche Wasserverlustreduzierer verzögern die Abbindung und erhöhen drastisch die Viskosität.

Die ersten gut wirksamen Wasserverlustreduzierer, die auch heute noch verwendet werden, sind Hydroxyethyl- und Carboxymethylhydroxyethylcellulose. Hydroxyethylcellulose hebt die Viskosität an und verzögert etwas die Abbindung. Carboxymethylhydroxyethylcellulose verzögert stärker, was aber durch Beschleuniger ausgeglichen werden kann. Mit steigender Temperatur lässt die Wirkung merklich nach. In der Folge wurden viele verschiedene vollsynthetische temperaturstabilere Polymere vorgeschlagen und sind in Anwendung.

US-3 994 852 beschreibt Polyvinylpyrrolidonpolyacrylamid-Polymere, US-3 943 996 Methacrylamidopropenyltrimethylammoniumchlorid-Copolymere, US-4 015 991 hydrolysierte Acrylamid-Acrylamidomethylenpropenylsulfonat-Copolymere, US-4 340 525 Acrylamid-, Natriumacrylat- und Natriumvinylsulfonat-Terpolymere, US-4 413 681 Reaktionsprodukte aus Polyamin und hochmolekularen sulfonierten Polymeren, US-4 602 685 Dimethyldiallylammoniumchlorid-Acrylsäure-Copolymere, EP-A-0 192 447 Dimethylacrylamid-Acrylamidomethylen-propenylsulfonat-Copolymere, US-4 683 953 Methacrylamidopropylentrimethyl-ammoniumchlorid-, Styrolsulfonat- und Acrylamid-Terpolymere, US-4 742 094 Reaktionsprodukte aus Polyethylenimin und sulfonierten organischen Verbindungen, US-4 568 471 verseifte Terpolymere aus Vinylsulfonat, Acrylamid, Vinylamid und EP-A-0 116 671 Acrylamidomethylen-propenylsulfonat-, Acrylamid- (teilverseift) und Vinylamid-Terpolymere, die in Zementschlämmen zur Kontrolle des Wasserverlustes eingesetzt werden.

Die Vielzahl der entwickelten Verbindungen macht deutlich, dass es stets problematisch ist, einen optimalen Zementschlamm zu formulieren. Bei durch den Typ der Zementation vorgegebenen Einzelparametern müssen die anderen Eigenschaften mit Additiven auf akzeptable Werte eingestellt werden. Die hohe Zahl der entwickelten Verbindungen für die Reduzierung des Wasserverlustes zeigt an, wie problematisch es meist ist, eine geforderte Wasserabgabe einzustellen, ohne die Viskosität wesentlich zu erhöhen, die Abbindezeit gemäß Anforderung einzustellen und die Sedimentation zu minimieren. Wasserverlustreduzierende Polymere erhöhen mehr oder weniger stark die Viskosität der Zementschlämme, welche zumeist eine hohe Dichte besitzen.

Für eine gute Verpumpbarkeit der Zementschlämme muss die Viskosität niedrig gehalten werden. Es soll eine Pumprate möglich sein, die eine turbulente Strömung ermöglicht. Nur unter diesen Bedingungen findet eine vollständige Verdrängung der Spülung statt. Dies ist Voraussetzung für eine gute Zementation. Bei geneigten Bohrungen lässt sich die Spülung nur durch eine starke turbulente Strömung gut verdrängen.

Neben der Verwendung als Hilfsmittel zur Formulierung der Zementschlämme finden wasserlösliche Copolymere auch Anwendung beim sog. water shut-off. Dabei handelt es sich um die Verminderung der Permeabilität des Wassers im sondennahen Bereich Erdöl bzw. Erdgas und Wasser führender Horizonte. Die Verwendung von water shut-off-Polymeren führt daher zur Verringerung oder Einstellung von Wasserzuflüssen zu einer Produktionsbohrung.

Oft existiert Wasser als Salzlösung in derselben Formation wie Erdöl oder Erdgas. Die Gewinnung von Erdöl oder von Erdgas bringt also die Gewinnung von Wasser in einer solchen Menge mit sich, dass sie beträchtliche Probleme aufwirft. Sie verursacht direkt oder indirekt Ablagerung von Salzen in der Nachbarschaft der Bohrung oder in der Bohrung selbst, sie vergrößert beträchtlich die Korrosion aller Metallteile untertage oder übertage, sie vergrößert ohne Nutzen die Mengen der gepumpten, übergeführten und gelagerten Flüssigkeiten und sie schafft mit dem Öl Emulsionen, die schwierig übertage zu brechen sind und die untertage in den Hohlräumen der Formation Blockierungen bilden.

Gemäß dem Stand der Technik sind zahlreiche Verfahren vorgeschlagen und ausgeübt worden, die dazu

bestimmt sind, die Wasserzuflüsse in die Bohrungen zur Gewinnung von Erdöl oder Erdgas zu verringern. Sie bestehen oft darin, in der Formation zwischen dem Wasser und der Bohrung oder zwischen dem Wasser und dem Erdöl oder Erdgas eine undurchdringliche Sperre einzubringen. Die gewöhnlich eingebrachten Mittel blockieren fast ebenso viel Erdöl oder Erdgas wie Wasser. Die Bestandteile dieser Sperrung können sein: Zement, Harze, Suspensionen von festen Teilen, Paraffine oder wasserlösliche Polymere, die durch Einbringen von sogenannten Vernetzern (cross-linker) in der Lagerstätte vernetzt werden.

Oft verwendet man Polymere, die in Lösung in das poröse Milieu eingebracht werden, an der Oberfläche des Feststoffes adsorbiert werden und in den Porenraum hineinragen, so dass sie sich dafür eignen, die Wasserzuflüsse durch Reibung zu verringern. Im Gegensatz dazu passieren die nicht wässrigen Fluide, wie Erdöl oder vor allem Erdgas die adsorbierten Makromoleküle, die nun ein vernachlässigbares Volumen an der Wand einnehmen und so den Durchgang vollständig freilassen.

Aus US-4 095 651 ist die Verwendung von hydrolysierten Polyacrylamiden bekannt. Es hat sich jedoch gezeigt, dass dieser Polymertyp hauptsächlich gegenüber Wasser mit geringem Salzgehalt wirksam ist und durch das Wasser mit höherem Salzgehalt abgebaut wird. Bei höheren Temperaturen neigen diese Polymeren in Gegenwart von mehrwertigen Ionen zur Bildung von Niederschlägen, die die Poren der Gesteinsformation verstopfen können.

Aus US-4 718 491 ist die Verwendung von Polysacchariden bekannt. Diese Verbindungen, die schlecht in den Porenraum injizierbar sind, bewirken zwar eine Verzögerung oder Verminderung des Wasserzuflusses, lassen aber nur einen unvollständigen Abbau der vorhandenen Lagerstätten zu, bzw. verlieren bei höheren Temperaturen ihre Wirkung.

Aus US-4 842 071 ist die Verwendung von nicht-hydrolysierten Acrylamidpolymeren oder -copolymeren bekannt, die durch nachträgliches Einbringen einer wässrig-basischen Lösung hydrolysiert werden. Dieses Verfahren besitzt Nachteile hinsichtlich eines zusätzlichen Arbeitsaufwandes durch das Einbringen einer weiteren Lösung, sowie durch die Problematik der Erreichbarkeit der injizierten Polymerlösung durch das Nachlegen der basischen Lösung und im Hinblick auf eine erhöhte Korrosionsanfälligkeit der eingesetzten Geräte. Zudem ist die Wirksamkeit der Polymerlösung nur bei erfolgter Umsetzung mit der wässrig-basischen Lösung gegeben, wobei der Grad der Wirksamkeit durch den Umsetzungsgrad bestimmt wird.

Ein wesentlicher Nachteil der bislang bekannten synthetischen Polymere ist ihre Stabilität gegenüber dem biologischen Abbau. Staatliche Umweltschutzbestimmungen erfordern häufig ein Mindestmaß an biologischer Abbaubarkeit für die in der Erdölgewinnung verwendeten Hilfsmittel, wenn deren Verwendung zulässig sein soll.

Aus DE-A-199 26 355 sind Copolymere bekannt, die 5 bis 95 Gew.-% Struktureinheiten von Acrylamidosulfonaten, 1 bis 95 Gew.-% Struktureinheiten von Vinylphosphonsäure, 1 bis 95 Gew.-% Struktureinheiten eines stickstoffhaltigen kationischen Monomers, sowie gegebenenfalls noch Derivate der Acrylsäure und N-Vinylamide enthalten. Die biologische Abbaubarkeit der dort beispielhaft belegten Verbindungen ist jedoch unzureichend.

WO2008019987 beschreibt die Verwendung von Wasserlösliche Propfpolymere auf Polyamidbasis, welche durch Polymerisation von ethylenisch ungesättigten Monomeren hergestellt werden, und finden Verwendung als Additive in bauchemischen Anwendungen und bei der Erschliessung, Ausbeutung und Komplettierung unterirdischer Erdölund Erdgaslagerstätten.

Die Aufgabe der Erfindung war es daher, synthetische Copolymere bereitzustellen, die sowohl in der Exploration, d. h. bei Bohrspülung und Zementation, als auch bei Produktionsbohrungen einsetzbar sind. Sie sollen wirksame Wasserverlustreduzierer sein, und sich zum water shut-off eignen. Gegenüber den Copolymeren des Standes der Technik sollen sie sich durch eine verbesserte biologische Abbaubarkeit auszeichnen.

Es wurde nun überraschend gefunden, dass Mischpolymere, die Struktureinheiten von Acrylamido-N-Methylenpropenylsulfonsäure oder deren Derivaten, Vinylamiden und/oder Acrylsäure oder deren Derivaten enthalten, durch den Einbau von Vinylphosphonsäure oder deren Salze in das Mischpolymer gegenüber den Polymeren des Standes der Technik in ihrer biologischen Abbaubarkeit erheblich verbessert werden können. Solche Mischpolymere ermöglichen es, Zementschlämme mit niedrigem Wasserverlust zu formulieren. Diese Additive weisen daneben hervorragende Eigenschaften als Bohrspülung auf. Außerdem sind sie dazu in der Lage, selektiv die Permeabilität des Wassers in Erdgas bzw. Erdöl und Wasser führenden Horizonten soweit zu verringern, dass sie zum water shut-off geeignet sind.

Gegenstand der Erfindung ist daher die Verwendung von Vinylphosphonsäure oder eines Salzes davon als Monomer in einer Menge von 0,5 bis 25 Gew.-%, bezogen auf das Gewicht des Mischpolymers, zur Verbesserung der biologischen Abbaubarkeit von Mischpolymeren, welche durch radikalische Copolymerisation der Verbindungen der Formeln (1), (3), (4), (5) und Vinylphosphonsäure oder deren Salze erhalten wurden und von 75 bis 99,5 Gew.-% , bezogen auf das Gewicht des Mischpolymers, Monomere ausgewählt aus der Gruppe bestehend aus Verbindungen der Formel (1)

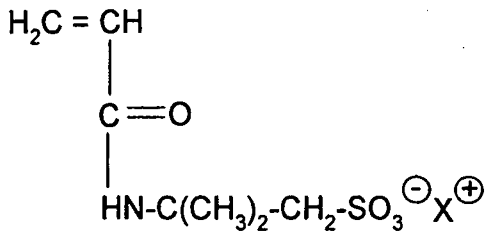

(1)

Formel (3)

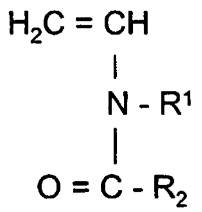

(3)

worin $R^1$ und $R^2$ unabhängig voneinander Wasserstoff oder $C_1$-$C_4$-Alkyl bedeuten, Formel (4)

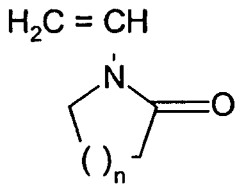

(4)

worin n für 3, 4 oder 5 steht, und Formel (5)

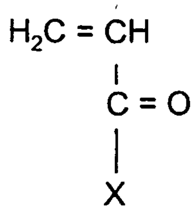

(5)

worin X für OH oder für $NR^3R^4$ steht, und $R^3$ und $R^4$ unabhängig voneinander für H oder $C_1$- bis $C_4$-Alkyl stehen, enthalten.

Ein weiterer Gegenstand der Erfindung ist ein Verfahren zur Verbesserung der biologischen Abbaubarkeit von Mischpolymeren, welche durch radikalische Copolymerisation der Verbindungen der Formeln (1), (3), (4), (5) und Vinylphosphonsäure oder deren Salze erhalten wurden und von 75 bis 99,5 Gew.-%, bezogen auf das Gewicht des Mischpolymers, Monomere ausgewählt aus der Gruppe bestehend aus Verbindungen der Formel (1)

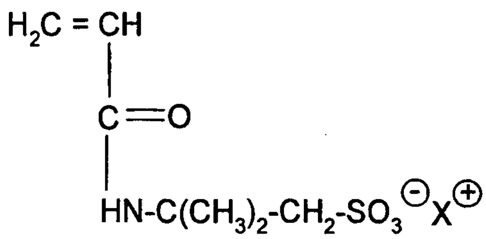

(1)

Formel (3)

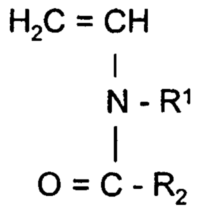

(3)

worin $R^1$ und $R^2$ unabhängig voneinander Wasserstoff oder $C_1$-$C_4$-Alkyl bedeuten, Formel (4)

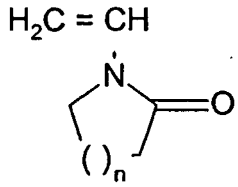

(4)

worin n für 3, 4 oder 5 steht, und Formel (5)

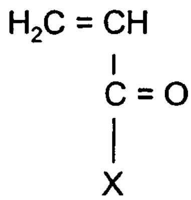

(5)

worin X für OH oder für $NR^3R^4$ steht, und $R^3$ und $R^4$ unabhängig voneinander für H oder $C_1$- bis $C_4$-Alkyl stehen, enthalten, indem Vinylphosphonsäure oder ein Salz davon in einer Menge von 0,5 bis 25 Gew.-%, bezogen auf das Gewicht des Mischpolymers, dem Mischpolymer einpolymerisiert werden.

Dialkyldimethylammoniumchlorid ist in allen Ausführungsformen der Erfindung in einer Menge von vorzugsweise unter 1 Gew.-%, insbesondere 0,001 bis 1 Gew.-%, speziell 0,001 bis 0,1 Gew.-% enthalten. Besonders bevorzugt fehlt es vollständig.

In allen Ausführungsformen der Erfindung liegt der Gewichtsanteil der Vinylphosphonsäure oder ihrer Salze vorzugsweise bei 0,8 bis 2,2, insbesondere bei 1 bis 2 Gew.-%, jeweils bezogen auf das Gesamtgewicht aller Monomere des Mischpolymers. Als Salze der Vinylphosphonsäure kommen vorzugsweise deren Alkalimetall- oder Ammoniumsalze in Betracht.

In allen Ausführungsformen der Erfindung liegt der Gewichtsanteil der Monomere der Formeln (1), (3), (4) und (5) vorzugsweise bei 97,8 bis 99,2, insbesondere bei 98 bis 99 Gew.-%, jeweils bezogen auf das Gesamtgewicht aller Monomere des Mischpolymers.

In einer bevorzugten Ausführungsform beträgt der Anteil von Struktureinheiten abgeleitet aus Verbindungen der Formel (1) in allen Ausführungsformen der Erfindung bis 95 Gew.-%, bevorzugt von 60 bis 90, insbesondere 70 bis 85 Gew.-%.

Der Anteil von Struktureinheiten abgeleitet aus Verbindungen der Formel (3) liegt vorzugsweise bei 1 bis 10, insbesondere 2 bis 8, speziell bei 3 bis 7 Gew.-%.

Der Anteil an Struktureinheiten abgeleitet aus Verbindungen der Formel (4) liegt vorzugsweise bei 1 bis 10, insbesondere 2 bis 8, speziell bei 3 bis 7 Gew.-%.

Der Anteil an Struktureinheiten abgeleitet aus Verbindungen der Formel (5) liegt vorzugsweise bei 1,5 bis 25, insbesondere 2 bis 23 Gew.-%. Formel (5) steht vorzugsweise für Acrylsäure und/oder Acrylamid. Steht Formel (5) nur für Acrylamid, so beträgt dessen Anteil vorzugsweise 1,5 bis 25, insbesondere 2 bis 23 Gew.-%. Steht Formel (5) für Acrylsäure und Acrylamid, so beträgt der Anteil von Acrylsäure vorzugsweise 0,5 bis 5 Gew.-%, insbesondere 2 bis 4 Gew.-%, und der Anteil an Acrylamid vorzugsweise 20 bis 25, insbesondere 21 bis 24 Gew.-%.

Die Reihenfolge der Monomereinheiten im Mischpolymeren ist beliebig. Es kann sich sowohl um statistische Polymere als auch um Blockpolymere handeln.

Die Molekulargewichte (Zahlenmittel) der erfindungsgemäßen Mischpolymere betragen vorzugsweise 50.000 bis 3.000.000 g/mol, insbesondere werden Produkte von 200.000 bis 1.000.000 g/mol eingesetzt.

Als Indikator für das Molekulargewicht dienen die relative Viskosität bzw. der k-Wert. Zur Bestimmung des k-Werts wird das Mischpolymer in einer bestimmten Konzentration (meist 0,5 %) gelöst und mittels Ubbelohde-Kapillar-Viskosimeter die Ausflusszeit bei 25 °C ermittelt. Dieser Wert ergibt die absolute Viskosität der Lösung ($\eta_c$). Die absolute Viskosität des Lösemittels ist $\eta_o$. Das Verhältnis beider absoluten Viskositäten ergibt die relative Viskosität

$$z = \frac{\eta_c}{\eta_o}$$

Aus den relativen Viskositäten als Funktion der Konzentration kann der k-Wert mittels folgender Gleichung ermittelt werden:

$$\mathrm{Lg}\, z = \left( \frac{75 \cdot k^2}{1 + 1.5\, kc} + k \right) c$$

Die erfindungsgemäßen Mischpolymere sind durch Copolymerisation von Verbindungen der Formeln (1), (2) und (3), (4) sowie (5), in den angegebenen Gewichtsverhältnissen herstellbar.

Die erfindungsgemäßen Mischpolymere können nach den üblichen Polymerisationsverfahren, wie Lösungspolymerisation, Substanzpolymerisation, Emulsionspolymerisation, inverse Emulsionspolymerisation, Fällungspolymerisation, Gelpolymerisation hergestellt werden. Sie sind vorzugsweise das Produkt einer radikalischen Copolymerisation der Verbindungen der Formeln (1), (2), (3), (4) und (5).

Vorzugsweise wird die Polymerisation als Lösungspolymerisation in Wasser und als Fällungspolymerisation ausgeführt.

Bei der Durchführung der Copolymerisation in einem mit Wasser mischbaren organischen Lösungsmittel arbeitet man unter den Bedingungen der Fällungspolymerisation. Hierbei fällt das Mischpolymer direkt in fester Form an und kann durch Abdestillieren des Lösungsmittels oder Absaugen und Trocknen isoliert werden.

Als wassermischbare organische Lösungsmittel, die hier geeignet sind, kommen insbesondere wasserlösliche Alkanole, nämlich solche mit 1 bis 4 C-Atomen, wie Methanol, Ethanol, Propanol, Isopropanol, n-, sec- und iso-Butanol, vorzugsweise aber tert. Butanol, in Betracht.

Der Wassergehalt der hierbei als Lösungsmittel eingesetzten niederen Alkanole sollte 6 Gew.-% nicht überschreiten, da sonst eine Klumpenbildung bei der Polymerisation auftreten kann. Vorzugsweise wird bei einem Wassergehalt von 0 bis 3 Gew.-% gearbeitet.

Die Menge des einzusetzenden Lösungsmittels richtet sich bis zu einem gewissen Grad nach der Art der eingesetzten Comonomeren. In der Regel werden pro 100 g Gesamtmonomere 200 bis 1000 g des Lösungsmittels eingesetzt.

Bei der Durchführung der Polymerisation in umgekehrter Emulsion wird die wässrige Monomerenlösung in bekannter Weise in einem mit Wasser nicht mischbaren organischen Lösungsmittel, wie Cyclohexan, Toluol, Xylol, Heptan oder hochsiedenden Benzinfraktionen unter Zusatz von 0,5 bis 8 Gew.-%, vorzugsweise 1 bis 4 Gew.-%, bekannter Emulgatoren vom W/O-Typ emulgiert und mit üblichen radikalbildenden Initiatoren polymerisiert. Bei diesem Verfahren werden wasserlösliche Monomere oder Mischungen davon in der Wärme zu hochmolekularen Mischpolymeren polymerisiert, indem man zunächst die Monomeren oder wässrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomeren können als solche in dem mit Wasser nicht mischbaren organischen Lösungsmittel emulgiert werden, oder sie können in Form einer wässrigen Lösung, die zwischen 100 und 5 Gew.-% Comonomere und 0 bis 95 Gew.-% Wasser enthält, eingesetzt werden, wobei die Zusammensetzung der wässrigen Lösung eine Frage der Löslichkeit der Comonomeren in Wasser und der vorgesehenen Polymerisationstemperatur ist. Das Gewichtsverhältnis zwischen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen. Als Ölphase kann im Prinzip jede inerte wasserunlösliche Flüssigkeit, d. h. im Prinzip jedes hydrophobe organische Lösungsmittel, eingesetzt werden. Im Allgemeinen verwendet man Kohlenwasserstoffe, deren Siedepunkt im Bereich von 120 bis 350 °C liegt. Diese Kohlenwasserstoffe können gesättigte, lineare oder verzweigte ParaffinKohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt

werden. Vorzugsweise verwendet man ein Gemisch aus gesättigten Normal- und Iso-Paraffinkohlenwasserstoffen, das bis zu 20 Gew.-% Naphthene enthält.

Mischpolymere mit besonders hohem Polymerisationsgrad in den Grundketten werden erhalten, wenn man die Polymerisation in wässriger Lösung nach dem Verfahren der sogenannten Gelpolymerisation durchführt. Dabei werden 15 bis 60 %ige wässrige Lösungen der Comonomeren mit bekannten geeigneten Katalysatoren ohne mechanische Durchmischung unter Ausnutzung des Trommsdorff-Norrisch-Effekts erhalten.

Durch Nacherhitzen der bei der Gelpolymerisation erhaltenen Polymerisatgele im Temperaturbereich von 50 bis 130 °C, vorzugsweise 70 bis 100 °C, können die Qualitätseigenschaften der Polymerisate noch verbessert werden.

Die auf diesem Wege hergestellten, in Form wässriger Gallerten vorliegenden Mischpolymere können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die Polymerisationsreaktion wird im Temperaturbereich zwischen -60 °C und 200 °C, bevorzugt zwischen 10 und 120 °C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische oder korpuskulare Strahlen oder die üblichen chemischen Polymerisationsinitiatoren herangezogen werden, z. B. organische Peroxide, wie Benzolperoxid, tert. Butylhydroperoxid, Methylethylketonperoxid, Cumolhydroperoxid, Azoverbindungen wie Azodiisobutyronitril oder 2'-Azo-bis-(2-amidinopropan)-dihydrochlorid sowie anorganische Peroxiverbindungen, wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische und aromatische Sulfinsäure, wie Benzolsulfinsäure und Toluolsulfinsäure oder Derivate dieser Säuren enthalten, wie z. B. Mannichaddukte aus Sulfinsäure, Aldehyden und Amino-Verbindungen. Pro 100 g Gesamtmonomeren werden in der Regel 0,03 bis 2 g des Polymerisationsinitiators eingesetzt.

Es ist weiterhin bekannt, den Polymerisationsansätzen kleine Mengen von sogenannten Moderatoren zuzusetzen, die den Verlauf der Reaktion dadurch harmonisieren, dass sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid, Monoalkylamine, Dialkylamine oder Trialkylamine, wie z. B. Dibutylamin. Auch bei der Herstellung der erfindungsgemäßen Copolymerisate können solche Moderatoren mit Vorteil verwendet werden.

Weiterhin können den Polymerisationsansätzen so genannte Regulatoren zugesetzt werden, das sind solche Verbindungen, die das Molekulargewicht der hergestellten Polymerisate beeinflussen. Brauchbare bekannte Regulatoren sind z. B. Alkohole, wie Methanol, Ethanol, Propanol, Isopropanol, n-Butanol, sec.-Butanol und Amylalkohole, Alkylmercaptane, wie z. B. Dodecylmercaptan und tert.-Dodecylmercaptan, Isooctylthioglycolat und einige Halogenverbindungen, wie z. B. Tetrachlorkohlenstoff, Chloroform und Methylenchlorid.

Die erfindungsgemäßen Mischpolymere sind hervorragend als Hilfsmittel bei Bohrspülungen geeignet.

Ihre biologische Abbaubarkeit ist derjenigen der Mischpolymere des Standes der Technik erheblich überlegen.

Zur Formulierung von wässrigen Bohrspülungen werden die erfindungsgemäßen Mischpolymere vorzugsweise in Konzentrationen von 0,5 bis 40 $kg/m^3$, insbesondere 3 bis 30 $kg/m^3$, eingesetzt. Die wässrigen Bohrspülungen enthalten zur Viskositätserhöhung und Abdichtung durchbohrter Formationen weiterhin Bentonite. Zur Dichteerhöhung der Bohrschlämme werden Schwerspat, Kreide und Eisenoxide zugesetzt.

Bentonit, Schwerspat, Kreide und Eisenoxid können allein oder in den verschiedensten Mischungsverhältnissen den Bohrspülungen zugegeben werden, wobei die rheologischen Eigenschaften der Bohrschlämme erhalten bleiben müssen. Werden die erfindungsgemäßen Mischpolymere zu üblichen Tiefbohrzementschlämmen, welche vorzugsweise 30 - 65 Gew.-%, insbesondere 35 - 55 Gew.-% Wasser, bezogen auf den eingesetzten trockenen Zement, enthalten, zugesetzt, so erhält man Zementschlämme mit erheblich verbesserten Fließ- und Abbindeeigenschaften und mit geringerem Wasserverlust.

Dabei werden die erfindungsgemäßen Mischpolymere vorzugsweise in Mengen von 0,1 - 2,0 Gew.-%, bezogen auf den eingesetzten Zement, Zementschlämmen üblicher Zusammensetzung zugesetzt, die bezogen auf z. B. Tiefbohrzement "Class G" z. B. 44 Gew.-% Wasser, 0,1 - 2,0 Gew.-% eines handelsüblichen Dispergators für Tiefbohrzement sowie gegebenenfalls Verzögerer oder Beschleuniger und andere Additive enthalten. Je nach Anforderungen kann der Zementschlamm statt mit Wasser z. B. auch mit synthetischem Meerwasser oder mit NaCl-Lösungen unterschiedlicher Dichte bis zur Sättigung angemischt werden.

Die Güte der so mit den erfindungsgemäßen Mischpolymeren hergestellten Zementschlämme wird gemäß API spec 10 beurteilt. Es ergeben sich Zementschlämme mit vorteilhaft niedriger plastischer Viskosität, geringem Wasserverlust und gemäß den Anforderungen regulierbarer Abbindezeit in einem Temperaturbereich von 60 - 200 °C.

Die erfindungsgemäßen Mischpolymere werden weiterhin bevorzugt zur Verringerung oder vollständigen Einstellung des Wasserflusses bei Bohrungen in Sandstein, Carbonatgestein oder Silikatgestein eingesetzt.

Durch eine Modifizierung der eingesetzten Mischpolymere kann die Absorptionsfähigkeit des Mischpolymers an den vorhandenen Gesteinstypus angepasst werden. Durch eine so genannte anionische Modifizierung der eingesetzten Mischpolymere lässt sich die Absorption von carbonathaltigen Gesteinen verbessern. Eine anionische Modifizierung wird üblicherweise durch einen Anteil an Struktureinheiten der Formel (1) und insbesondere der Formel (2) in Mischpolymeren erreicht.

Durch eine so genannte kationische Modifizierung der eingesetzten Mischpolymeren lässt sich die Absorption an silikathaltigen Gesteinen verbessern. Eine kationische Modifizierung wird üblicherweise durch einen Anteil an Struktureinheiten der Formeln (3) oder (4) erreicht.

Die erfindungsgemäßen Mischpolymere enthalten sowohl Struktureinheiten der Formeln (1) und (2) als auch solche der Formeln (3) oder (4). Sie vermindert somit die relative Permeabilität des Wassers durch verbesserte Adsorption an carbonathaltigem Gestein und an silikathaltigen Gesteinen sowie an den häufig vorkommenden Mischformen.

Für Komplettierungs- und Aufwältigungsflüssigkeiten werden z. B. $CaCl_2$-(max. 1,40 g/cm$^3$), $CaBr_2$-(max. 1,71 g/cm$^3$) oder $CaCl_2/CaBr_2$- (max. 1,81 g/cm$^3$) Lösungen verwendet, die auch bei höheren Temperaturen einen niedrigen Wasserverlust aufweisen müssen.

Die Herstellung und Anwendung der erfindungsgemäßen Mischpolymere wird durch die folgenden Beispiele veranschaulicht.

Beispiele

Tabelle 1: Zusammensetzung der Mischpolymere in Gew.-%

| Mischpolymer | AMPS | VPS | NVA | NVP | AS | AA |
|---|---|---|---|---|---|---|
| 1 | 84 | 1,9 | 4,7 | 4,7 | 0 | 4,7 |
| 2* | 72,5 | 1,2 | 1,4 | 0 | 2,5 | 22,4 |
| 3* | 74,8 | 1,5 | 1,1 | 0 | 0 | 22,6 |
| V1 | 85 | 0 | 5 | 5 | 0 | 0 |
| V2 | 73,3 | 0 | 1,5 | 0 | 2,6 | 22,6 |
| V3 | 76,0 | 0 | 1,1 | 0 | 0 | 22,9 |

*: nicht gemäß Erfindung
AMPS® = Acrylamidopropenylsulfonsäure VPS = Vinylphosphonsäure
VPS = Vinylphosphonsäure-Ammoniumsalz
NVA = N-Vinylformamid
NVP = N-Vinylpyrrolidon
AS = Acrylsäure
AA = Acrylamid

Tabelle 2: Biologische Abbaubarkeit nach OECD 306; in %

| Mischpolymer | Tage | | | |
|---|---|---|---|---|
| | 7 | 14 | 21 | 28 |
| 1 | 3,3 | 0,7 | 12,2 | 27,2 |
| 2* | 0 | 13 | 17 | 35 |
| 3* | 0 | 7 | 20 | 22 |
| V1 | 4 | 7 | 7 | 3 |
| V2 | 2 | 5 | 6 | 4 |
| V3 | 3 | 3 | 4 | 5 |

*: nicht gemäß Erfindung

## Patentansprüche

1. Verwendung von Vinylphosphonsäure oder eines Salzes davon als Monomer in einer Menge von 0,5 bis 25 Gew.-

%, bezogen auf das Gewicht des Mischpolymers, zur Verbesserung der biologischen Abbaubarkeit von Mischpolymeren, welche durch radikalische Copolymerisation der Verbindungen der Formeln (1), (3), (4), (5) und Vinylphosphonsäure oder deren Salze erhalten wurden und von 75 bis 99,5 Gew.-%, bezogen auf das Gewicht des Mischpolymers, Monomere ausgewählt aus der Gruppe bestehend aus Verbindungen der Formel (1)

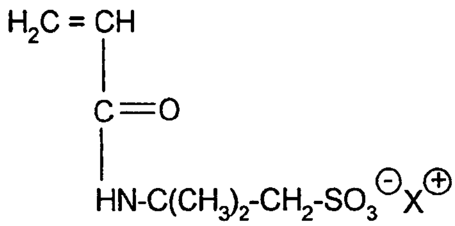

(1)

Formel (3)

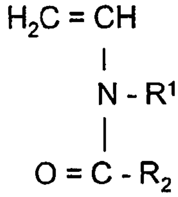

(3)

worin $R^1$ und $R^2$ unabhängig voneinander Wasserstoff oder $C_1$-$C_4$-Alkyl bedeuten,
Formel (4)

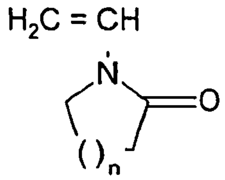

(4)

worin n für 3, 4 oder 5 steht, und
Formel (5)

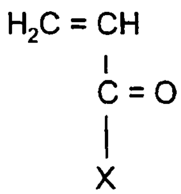

(5)

worin X für OH oder für $NR^3R^4$ steht, und $R^3$ und $R^4$ unabhängig voneinander für H oder $C_1$- bis $C_4$-Alkyl stehen, enthalten.

**2.** Verwendung nach Anspruch 1, wobei Gehalt der Mischpolymere an Struktureinheiten abgeleitet von Verbindungen der Formel (1) von 60 bis 90 Gew.-% beträgt.

**3.** Verwendung nach Anspruch 1 und/oder 2, wobei der Gehalt der Mischpolymere an Struktureinheiten abgeleitet von Vinylphosphonsäure oder deren Salze von 0,8 bis 2,2 Gew.-% beträgt.

**4.** Verwendung nach einem oder mehreren der Ansprüche 1 bis 3, wobei der Gehalt der Mischpolymere an Struktureinheiten abgeleitet von Verbindungen der Formel (3) von 2 bis 8 Gew.-% beträgt.

**5.** Verwendung nach einem oder mehreren der Ansprüche 1 bis 4, wobei der Gehalt der Mischpolymere an Struktureinheiten abgeleitet von Verbindungen der Formel (4) von 2 bis 8 Gew.-% beträgt.

**6.** Verwendung nach einem oder mehreren der Ansprüche 1 bis 5, wobei der Gehalt der Mischpolymere an Struktureinheiten abgeleitet von Verbindungen der Formel (5) von 2 bis 25 Gew.-% beträgt.

**7.** Verwendung nach einem oder mehreren der Ansprüche 1 bis 6, worin der Anteil von Acrylsäure am Mischpolymeren 0,5 bis 5 Gew.-% und der Anteil von Acrylamid am Mischpolymeren 20 bis 25 Gew.-% beträgt.

**8.** Verwendung nach einem oder mehreren der Ansprüche 1 bis 7 zur Verminderung des Wasserverlustes in Bohrlochzementierungen.

**9.** Verwendung nach einem oder mehreren der Ansprüche 1 bis 7 zur Verminderung des Wasserverlustes in Bohrspülungen.

**10.** Verwendung nach einem oder mehreren der Ansprüche 1 bis 7 zur Verminderung der Permeabilität des Wassers in Erdöl, Erdgas und Wasser führenden Horizonten im sondennahen Bereich.

**11.** Verwendung nach einem oder mehreren der Ansprüche 1 bis 7 zur Verminderung des Wasserverlustes in Komplettierungs- und Aufwältigungsflüssigkeiten.

**12.** Verfahren zur Verbesserung der biologischen Abbaubarkeit von Mischpolymeren, welche von 75 bis 99,5 Gew.-% , bezogen auf das Gewicht des Mischpolymers, Monomere ausgewählt aus der Gruppe bestehend aus Verbindungen der Formel (1)

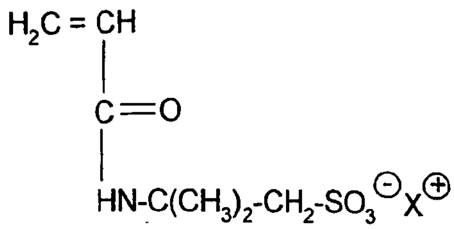

(1)

Formel (3)

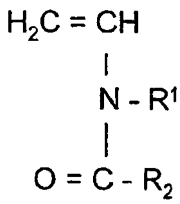

(3)

worin $R^1$ und $R^2$ unabhängig voneinander Wasserstoff oder $C_1$-$C_4$-Alkyl bedeuten,
Formel (4)

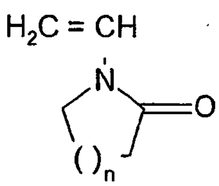

(4)

worin n für 3, 4 oder 5 steht, und
Formel (5)

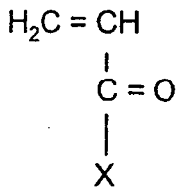

(5)

worin X für OH oder für $NR^3R^4$ steht, und $R^3$ und $R^4$ unabhängig voneinander für H oder $C_1$- bis $C_4$-Alkyl stehen, enthalten, indem Vinylphosphonsäure oder ein Salz davon in einer Menge von 0,5 bis 25 Gew.-%, bezogen auf das Gewicht des Mischpolymers, mit den Verbindungen der Formeln (1), (3), (4), (5) radikalisch dem Mischpolymer einpolymerisiert werden.

## Claims

**1.** The use of vinylphosphonic acid or of a salt thereof as a monomer in an amount of 0.5 to 25% by weight, based on the weight of the copolymer, for improving the biodegradability of copolymers which have been obtained by free-radical copolymerization of the compounds of the formulae (1), (3), (4), (5) and vinylphosphonic acid or salts thereof and contain from 75 to 99.5% by weight, based on the weight of the copolymer, of monomers selected from the group consisting of compounds of the formula (1)

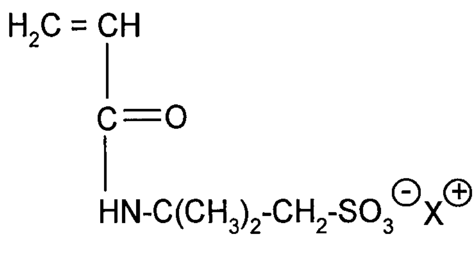

(1)

formula (3)

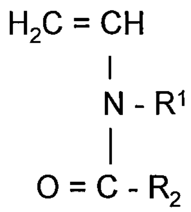

(3)

in which $R^1$ and $R^2$, independently of one another, are hydrogen or $C_1$-$C_4$-alkyl,
formula (4)

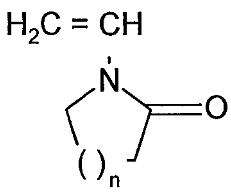

(4)

in which n is 3, 4 or 5, and
formula (5)

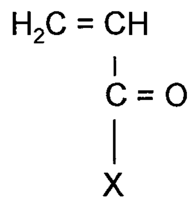

(5)

in which X is OH or $NR^3R^4$, and $R^3$ and $R^4$, independently of one another, are H or $C_1$-$C_4$-alkyl.

**2.** The use as claimed in claim 1, wherein the content in the copolymers of structural units derived from compounds of the formula (1) is from 60 to 90% by weight.

**3.** The use as claimed in claim 1 and/or 2, wherein the content in the copolymers of structural units derived from vinylphosphonic acid or salts thereof is from 0.8 to 2.2% by weight.

**4.** The use as claimed in one or more of claims 1 to 3, wherein the content in the copolymers of structural units derived from compounds of the formula (3) is from 2 to 8% by weight.

**5.** The use as claimed in one or more of claims 1 to 4, wherein the content in the copolymers of structural units derived from compounds of the formula (4) is from 2 to 8% by weight.

**6.** The use as claimed in one or more of claims 1 to 5, wherein the content in the copolymers of structural units derived from compounds of the formula (5) is from 2 to 25% by weight.

**7.** The use as claimed in one or more of claims 1 to 6, in which the proportion of acrylic acid in the copolymer is 0.5 to 5% by weight and the proportion of acrylamide in the copolymer is 20 to 25% by weight.

**8.** The use as claimed in one or more of claims 1 to 7 for reducing the water loss of borehole cements.

**9.** The use as claimed in one or more of claims 1 to 7 for reducing the water loss of drilling muds.

**10.** The use as claimed in one or more of claims 1 to 7 for reducing the water permeability in petroleum-, natural gas- and water-conveying horizons in the area close to the probe.

**11.** The use as claimed in one or more of claims 1 to 7 for reducing the water loss in completion and clearing-out liquids.

**12.** A process for improving the biodegradability of copolymers which contain from 75 to 99.5% by weight, based on the weight of the copolymer, of monomers selected from the group consisting of compounds of the formula (1)

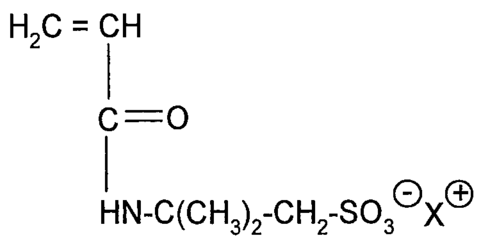

(1)

formula (3)

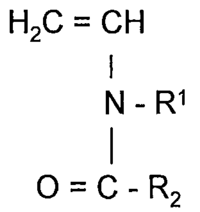

(3)

in which $R^1$ and $R^2$, independently of one another, are hydrogen or $C_1$-$C_4$-alkyl,
formula (4)
in which n is 3, 4 or 5, and
formula (5)

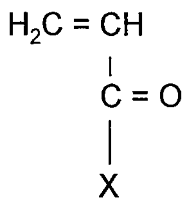

(5)

in which X is OH or $NR^3R^4$, and $R^3$ and $R^4$, independently of one another, are H or $C_1$-$C_4$-alkyl, by free-radically copolymerizing vinylphosphonic acid or a salt thereof in the copolymer in an amount of 0.5 to 25% by weight, based on the weight of the copolymer, with the compounds of the formulae (1), (3), (4), (5).

## Revendications

1. Utilisation d'acide vinylphosphonique ou d'un sel de celui-ci comme monomère, en une quantité de 0,5 à 25% en poids, par rapport au poids du copolymère, pour améliorer la biodégradabilité de copolymères, qui ont été obtenus par copolymérisation radicalaire des composés des formules (1), (3), (4), (5) et d'acide vinylphosphonique ou ses sels et qui contiennent 75 à 99,5% en poids, par rapport au poids du copolymère, de monomères choisis dans le groupe constitué par les composés de formule (1)

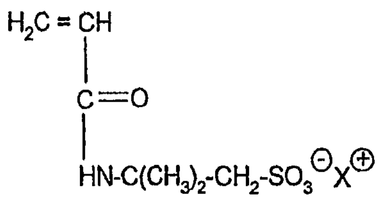

(1)

de formule (3)

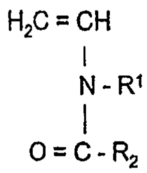

(3)

dans laquelle $R^1$ et $R^2$ signifient, indépendamment l'un de l'autre, hydrogène ou $C_1$-$C_4$-alkyle, de formule (4)

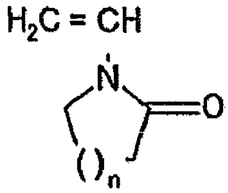

(4)

où n vaut 3, 4 ou 5, et de formule (5)

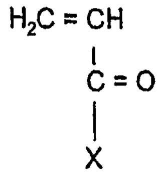

(5)

où X représente OH ou $NR^3R^4$ et $R^3$ et $R^4$ représentent, indépendamment l'un de l'autre, H ou $C_1$-$C_4$-alkyle.

2. Utilisation selon la revendication 1, la teneur des copolymères en unités structurelles dérivées de composés de formule (1) étant de 60 à 90% en poids.

3. Utilisation selon la revendication 1 et/ou 2, la teneur des copolymères en unités structurelles dérivées d'acide vinylphosphonique ou de ses sels étant de 0,8 à 2,2% en poids.

4. Utilisation selon l'une ou plusieurs des revendications 1 à 3, la teneur des copolymères en unités structurelles dérivées de composés de formule (3) étant de 2 à 8% en poids.

5. Utilisation selon l'une ou plusieurs des revendications 1 à 4, la teneur des copolymères en unités structurelles dérivées de composés de formule (4) étant de 2 à 8% en poids.

6. Utilisation selon l'une ou plusieurs des revendications 1 à 5, la teneur des copolymères en unités structurelles dérivées de composés de formule (5) étant de 2 à 25% en poids.

7. Utilisation selon l'une ou plusieurs des revendications 1 à 6, la proportion d'acide acrylique dans les copolymères étant de 0,5 à 5% en poids et la proportion d'acrylamide dans les copolymères étant de 20 à 25% en poids.

8. Utilisation selon l'une ou plusieurs des revendications 1 à 7 pour diminuer la perte d'eau dans les cimentages des trous de forage.

9. Utilisation selon l'une ou plusieurs des revendications 1 à 7 pour diminuer la perte d'eau dans les boues de forage.

10. Utilisation selon l'une ou plusieurs des revendications 1 à 7 pour diminuer la perméabilité de l'eau dans les couches de sol guidant le pétrole, le gaz naturel et l'eau à proximité des puits.

11. Utilisation selon l'une ou plusieurs des revendications 1 à 7 pour diminuer la perte d'eau dans les liquides de complétion et de reconditionnement.

12. Procédé pour améliorer la biodégradabilité de copolymères, qui contiennent 75 à 99,5% en poids, par rapport au poids du copolymère, de monomères choisis dans le groupe constitué par les composés de formule (1)

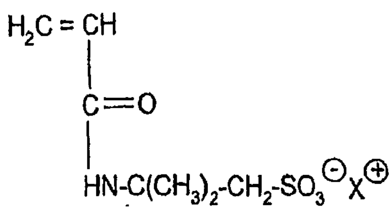

(1)

de formule (3)

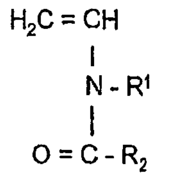

(3)

dans laquelle $R^1$ et $R^2$ signifient, indépendamment l'un de l'autre, hydrogène ou $C_1$-$C_4$-alkyle, de formule (4)

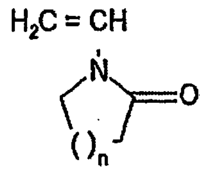

(4)

où n vaut 3, 4 ou 5, et de formule (5)

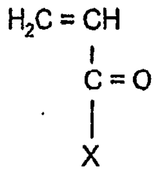

(5)

où X représente OH ou $NR^3R^4$, et $R^3$ et $R^4$ représentent, indépendamment l'un de l'autre, H ou $C_1$-$C_4$-alkyle, en ce que de l'acide vinylphosphonique ou un sel de celui-ci est copolymérisé en une quantité de 0,5 à 25% en poids, par rapport au poids du copolymère, avec les composés des formules (1), (3), (4), (5) par voie radicalaire dans le copolymère.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3465825 A
- US 4053323 A
- DE 2830528 B
- GB 1473767 B
- US 3994852 A
- US 3943996 A
- US 4015991 A
- US 4340525 A
- US 4413681 A
- US 4602685 A
- EP 0192447 A
- US 4683953 A
- US 4742094 A
- US 4568471 A
- EP 0116671 A
- US 4095651 A
- US 4718491 A
- US 4842071 A
- DE 19926355 A
- WO 2008019987 A